# EUROPEAN PATENT APPLICATION

(11) **EP 4 628 548 A1**
(43) Date of publication of application: **08.10.2025**
(21) Application number: 23813794.7
(22) Date of filing: 03.11.2023
(51) Int. Cl.: C09C 1/02, C04B 35/628, C09C 3/06, C09D 5/02

(54) **TITANIUM OXIDE HIERARCHICAL COMPOSITE MATERIAL DISPERSED IN A MINERAL SUPPORT AND METHOD FOR OBTAINING THE SAME**

(30) Priority: 04.11.2022 ES 202230953
(71) Applicant: Consejo Superior De Investigaciones Científicas, 28006 Madrid (ES); Encapsulae, S.L., 12006 Castellón (ES)
(72) Inventor: JIMENEZ REINOSA, Julián, 28049 Madrid (ES); FERNÁNDEZ LOZANO, José Francisco, 28049 Madrid (ES); MENÉNDEZ MEDINA, José Javier, 12005 Castellón de la Plana, Castellón (ES)
(74) Representative: ABG Intellectual Property Law, S.L.
(86) International application number: PCT/ES2023/070648
(87) International publication number: WO 2024/094912

(57) **Abstract**

The present invention relates to a hierarchical composite material comprising a discontinuous layer of titanium oxide particles dispersed on the surface of a core formed by a mineral particle. The invention also relates to a method for obtaining said material by applying mechanical forces to a dry mixture of titanium oxide particles and minerals. The product of the invention is useful as an opacifier and/or whitening agent in the formulation of paints and plastics.

## Description

### FIELD OF THE INVENTION

The present invention relates to a hierarchical composite material comprising a discontinuous layer of titanium oxide particles dispersed on the surface of a core formed by a mineral particle. The invention also refers to a procedure for obtaining said material by applying mechanical forces to a dry mixture of titanium oxide particles and minerals. The product of the invention is useful as an opacifying and/or whitening agent in the formulation of paints and plastics.

### BACKGROUND OF THE INVENTION

Hierarchical composite materials comprising titanium oxide particles supported on a mineral support are known in the art. This type of materials makes it possible to increase the efficiency of titanium oxide as a coloring pigment and, in turn, reduce the amount of titanium oxide required to achieve a certain degree of whiteness. This is particularly the case when the mineral support consists of calcium carbonate. In this sense, numerous examples of hierarchical composite materials have been reported, the efficiency of which varies substantially depending on the preparation method of the composite material used as well as its structure at a microscopic level.

A first known method of preparing these compounds consists of precipitating calcium carbonate from calcium hydroxide in the presence of titanium oxide by carbonation. Said method is described for example in patent application US 6,991,677 and provides titanium oxide particles on the surface of spindle-shaped calcium carbonate particles. An advantage of this method is that it does not require the use of dispersing agents to prepare the composite material. The method comprises carrying out carbonation of calcium oxide in the presence of titanium oxide. In particular, said process uses aqueous mixtures of the starting products. It is further described that the composite material has a greater opacifying character in the preparation of paper compared to the mixture of calcium carbonate and titanium oxide. The particles described in this document are spindle-shaped and the state of aggregation of titanium oxide on said particles is not specified.

On the other hand, milling methods have been described that allow the preparation of composite materials by deposition of a particle on the surface of another particle, thus forming a core/outer shell type composite material. In this sense, document WO 2010/010220 describes a dispersion procedure by dry stirring of nanoparticles with an average diameter of 100 nm or less on mineral supports, so that the nanoparticles are dispersed and anchored on the surface of the mineral support. This process occurs thanks to the complementary electrostatic charge of the nanoparticles with the support. In this aspect, said document mentions that the presence of humidity significantly reduces the electrostatic charge of the nanoparticles, and can make it difficult for the nanoparticle to adhere to the support. Despite this, the document does not mention any preferred amount of water in the starting products, nor does it suggest that the use of anhydrous starting materials makes it possible to prevent the aggregation of particles of the same material with each other. Furthermore, this document does not suggest that this method can be used with calcium carbonate and/or titanium oxide.

A process for preparing a composite material of titanium oxide deposited on calcium carbonate by milling in an aqueous medium is described in Lin, H., Dong, Y., Jiang, L. Preparation of calcium carbonate particles coated with titanium dioxide. International J Min Met Mater. 2009; 16(5):592-7. In particular, said document describes a process in which: (i) a suspension of CaCO₃ with a particle size of 2 µm is prepared by milling calcium carbonate suspended in water and in the presence of a dispersing agent, (ii) it is added TiO₂ with particle size of ca. 2 µm to the mixture resulting from step (i) in amounts of between 30% and 60% by weight, (iii) the suspension resulting from step (ii) is treated by milling, (iv) the material composed of filtration and drying of the product from step (iii). It is further described that the optimal amount of TiO₂ is 35% by weight. However, the impact of the presence of water in the starting mixture is not commented on. This document further teaches that the adhesion process of TiO₂ on the surface takes place through interactions between the OH⁻ groups of the surfaces of each particle. In particular, the OH⁻ groups of CaCO₃ come from a reaction with the water present in the atmosphere. The document also indicates that the Ti⁴⁺ cations of TiO₂ generate hydroxylation products in the presence of water, and that these products are the starting point for the formation of the composite material in mechanochemical reactions.

A similar method is described in international patent application WO2006/008657. The method of producing self-adhesive pigment particles, dry or in aqueous suspension, comprises, among other steps:
(i) Form an aqueous suspension of a mineral support (e.g. calcium carbonate)
(ii) Provide an adhesive optionally in suspension,
(iii) Co-mill the mixture of the materials provided in (i) and (ii)

The adhesive is typically a semi-crystalline latex type polymer. In particular, example 4 corresponds to the preparation of a particle composed of talc with titanium oxide. In this example, a mixture of starch with polyvinyl alcohol is used as an adhesive. The talc particles have a diameter of 13 µm and the TiO₂ particles have a diameter of 0.2 µm, with an amount of TiO₂ of 50% by weight. This document does not comment on the state of aggregation of the titanium oxide particles among themselves and uses a milling step in the aqueous phase.

On the other hand, Sijia Sun, Hao Ding and Xifeng Hou. Preparation of CaCO3-TiO2 Composite Particles and Their Pigment Properties. Materials 2018, 11, 1131, is a scientific article that describes the preparation of composite materials of titanium oxide and calcium carbonate useful as pigments. Said material is prepared according to the procedure that includes mixing an aqueous suspension of calcium carbonate dispersed in water thanks to sodium polyacrylate (dispersant) with an aqueous suspension of titanium oxide dispersed in water thanks to sodium polyacrylate, and subjecting the aqueous mixture resulting to a wet milling stage in the presence of balls. The composite material is isolated by filtration and drying of the suspension resulting from the wet milling step. Said document also indicates that the resulting material is useful as a pigment in paint formulation.

There is therefore a need in the state of the art to provide improved titanium oxide composite pigment materials free of dispersing agents, in particular because they provide greater opacifying character when used in paints and/or plastic materials.

### SUMMARY OF THE INVENTION

The inventors have discovered a dry milling process that allows the preparation of materials composed of titanium oxide particles dispersed substantially isotropically on the surface of a particle forming a mineral core. The process is characterized in that it uses dry starting products, or with a low moisture content, in particular less than 0.05% by weight, and does not require the use of dispersing agents suitable for dispersing the titanium oxide on the surface of the particles of the mineral core, unlike the milling procedures described in the state of the art for the preparation of these materials. The process of the invention does not require solvents, thus affording saving on the use of solvent and avoiding the steps of filtering, evaporation and/or drying stages described in the state of the art, which have an energy cost. The starting materials used have a specific particle size and are used in specific quantities so that the surface of the mineral core is covered by a discontinuous layer of titanium oxide particles distributed over said surface in a substantially isotropic manner and so that the titanium oxide particles are not aggregated together, but rather the majority of titanium oxide particles are in contact with the mineral core particle without being in direct contact with a titanium oxide particle.

This optimized distribution of titanium oxide particles on the surface gives the composite material obtained by the process of the invention improved properties in terms of its interaction with light. Likewise, the composite material obtained by the process of the invention gives paints that comprise said material a greater opacifying character than paints that contain composite materials prepared by aqueous milling procedures. Furthermore, as they do not contain a dispersing agent, these materials are cheaper to produce, as raw materials are saved. The inventors have further discovered that the material prepared by the process of the invention has a higher visible light reflectance than a dispersing agent-free material formed by an aqueous phase milling process. Thus, the compositions that comprise the materials of the invention, for example paints or plastic formulations, act as heat dissipating agents by reflecting the light responsible for the heating of the composition irradiated by said light. Additionally, as shown in the Examples, the composite material obtained by the process of the invention allows improving the color performance of paints with a low titanium oxide or colorant load, resulting in savings in titanium oxide or colorant in the paint formulation.

Therefore, a first aspect of the invention relates to a hierarchical composite material that comprises:
- one or more cores, each core being formed by a mineral particle comprising a material selected from the group consisting of talc, calcium carbonate, calcium silicate, calcium sulfate and aluminosilicates and having a particle size of between 1 and 15 µm; and
- a discontinuous layer of titanium oxide particles dispersed on the surface of each core, the titanium oxide particles having a size between 100 and 1000 nm, such that the amount of titanium oxide is between 5% and 30 % by weight of the composition,
characterized in that the hierarchical composite material does not comprise any dispersing agent suitable for dispersing the titanium oxide particles on the surface of the mineral core and because the titanium oxide particles are not substantially aggregated together.

A second aspect of the invention relates to a process for preparing a hierarchical composite material that comprises the steps of:
(i) providing a solid mixture with a moisture content of less than 0.05% by weight of the mixture comprising (a) one or more minerals in the form of particles of size between 1 and 15 µm comprising a selected material from the group consisting of talc, calcium carbonate, calcium silicate, calcium sulfate and aluminosilicates, and (b) titanium oxide in the form of particles having a size between 100 and 1000 nm and in such an amount that the amount of titanium oxide represents from 5% to 30% by weight of said mixture, the solid mixture being characterized by not containing any dispersing agent suitable for dispersing the titanium oxide particles on the surface of the one or more minerals;
(ii) subjecting the mixture provided in step (i) to mechanical forces to disperse the titanium oxide particles over the particle surface of the one or more minerals.

The third aspect of the invention refers to the hierarchical composite material obtainable by the process according to the second aspect of the invention.

Likewise, the fourth aspect of the invention relates to the use of the hierarchical composite material according to the first or third aspect of the invention as a whitening and/or opacifying agent in paint formulation.

A fifth aspect of the invention relates to a paint composition comprising a hierarchical composite material according to the first or third aspect of the invention.

On the other hand, the sixth aspect of the invention relates to the use of the hierarchical composite material according to the first or third aspect of the invention as a heat dissipating agent and/or opacifying agent in plastic formulation.

Finally, a seventh aspect of the invention relates to a polymer composition suitable for forming plastic products by thermoforming comprising a hierarchical composite material according to the first or third aspect of the invention.

### DESCRIPTION OF THE FIGURES

Figure 1 shows field emission scanning electron microscopy images of (a) material M1 as prepared according to Example 1, (b) material M2 as prepared according to Example 1, (c) material M3 as prepared according to Example 1, and (d) the material M4 as prepared according to Comparative Example 1.
Figure 2 shows the light reflectance (y-axis, expressed as %) as a function of wavelength (x-axis, expressed in nm) of titanium oxide Ti1 (x symbol), calcium carbonate C1 (square symbol), hierarchical composite M1 (circle symbol) and comparative composite M4 (triangle symbol).
Figure 3 shows the light reflectance (y-axis, expressed as %) as a function of wavelength (x-axis, expressed in nm) of titanium oxide Ti1 (x symbol), calcium carbonate C2 (rhombus symbol), hierarchical composite M2 (circle symbol) and comparative composite M5 (triangle symbol).
Figure 4 shows the light reflectance (y-axis, expressed as %) as a function of wavelength (x-axis, expressed in nm) of titanium oxide Ti1 (x symbol), talc Ta1 (symbol of square) and the hierarchical composite material M3 (circle symbol).
Figure 5 shows the absorbance of light (y axis) as a function of wavelength (x axis, expressed in nm) of titanium oxide Ti1 (x symbol), calcium carbonate C1 (square symbol), hierarchical composite material M1 (circle symbol) and comparative composite material M4 (triangle symbol).
Figure 6 shows the light absorbance (y axis) as a function of wavelength (x axis, expressed in nm) of titanium oxide Ti1 (x symbol), calcium carbonate C2 (diamond symbol), hierarchical composite material M2 (circle symbol) and comparative composite material M5 (triangle symbol).
Figure 7 shows the light absorbance (y axis) as a function of wavelength (x axis, expressed in nm) of titanium oxide Ti1 (x symbol), talc Ta1 (square symbol) and the hierarchical composite material M3 (circle symbol).
Figure 8 shows field emission scanning electron microscopy images of the hierarchical composite material M9 as prepared according to Example 2.

### DETAILED DESCRIPTION OF THE INVENTION

In the context of the invention, the term "hierarchical composite material" refers to a material that comprises at least two solid phases in which said phases are organized in a hierarchical manner. In particular, when the solid phases are particles of a phase A and a phase B, the hierarchical composite material consists of particles of phase B deposited on the surface of the particles of phase A. The distribution of the particles of said phase B on said phase A may be more or less uniform depending on the efficiency of the preparation procedure of the hierarchical composite material and the strength of the interactions between particles A and B, B and B, and A and A. In particular, said distribution competes directly with the aggregation of particles of the same phase with each other. Likewise, in the context of the invention, the titanium oxide particles can be distributed uniformly and isotropically on the surface of the core formed by a mineral particle, this embodiment being preferred, and/or they can be aggregated together. Therefore, the titanium oxide particles can be deposited on the core formed by a mineral particle individually or in the form of aggregate, with the individual deposition being preferred. The form of deposition of titanium oxide particles can be observed by microscopy, in particular by scanning electron microscopy. In preferred embodiments, it is considered that "the titanium oxide particles are not substantially aggregated with each other" when the core formed by a mineral particle is covered by a greater number of individual titanium oxide particles or aggregates of up to 5 particles of titanium oxide than of aggregates of titanium oxide particles comprising 6 or more titanium oxide particles. Said specific distribution of the particles gives the composite material of the invention a specific interaction profile with light.

In the context of the invention, the term "core formed by a mineral particle" or "mineral particle core" or "mineral core" refers to a component of hierarchical material that occupies the position of core and that comprises a particle of an inorganic material as defined in the present invention and on whose surface the titanium oxide particles are deposited and dispersed. Likewise, it is contemplated in the present invention that said core comprises additional components to the mineral particle.

In the context of the invention, the term "aluminosilicates" refers to a group of minerals that comprises different families of minerals such as feldspar, clay or zeolite materials.

In the context of the invention, the term "feldspar materials" refers to a group of tecto and aluminosilicate minerals and whose composition comprises one or more of orthoclase (KAlSi₃O₈), albite (NaAlSi₃O₈) and anorthite (CaAl₂Si₂O₈).

In the context of the invention, the term "clay materials" refers to a group of minerals that are hydrated aluminum phyllosilicates where the hydration refers to hydroxyl groups occupying positions in the crystal lattice. Clay materials comprise sheets of tetrahedra with a general chemical composition of Si₂O₅, whereby each tetrahedron (SiO₄) is joined at its corners to three others forming a hexagonal network. At the same time, another parallel sheet composed of octahedra containing Al³⁺ cations is part of the clay materials. Specifically, within the clay materials, the present invention refers to materials that belong to the group of kaolinites, smectites or the illites.

In the context of the invention, the term "zeolite materials" refers to a group of microporous aluminosilicate minerals. Zeolites are similar in structure and chemistry to feldspars with the difference that zeolites have larger cavities, that is, at least 0.1 nm in diameter, and that they usually house water molecules or other solvents.

In the context of the invention, the term "particle size" refers to the longest dimension of a particle, expressed as the median value of particle sizes within a statistical population of particles. In the specific case of an essentially spherical particle, the particle size refers to the particle diameter. In the specific case of a particle of essentially polyhedral shape, the particle size refers to the longest dimension of all the dimensions of said shape. Particle size can be measured using techniques known in the art, such as the use of dynamic light scattering (DLS) techniques.

In the context of the invention, the term "dispersion agent suitable for dispersing titanium oxide particles on the surface of the mineral core" refers to an organic or inorganic compound with affinity for the support of the core formed by a mineral particle or titanium oxide particle and with the ability to break up aggregates of titanium oxide particles. Said agents are known in the art and can be, among other agents, polyanions such as alkaline polyacrylates.

In the context of the invention, the term "essentially consists" is similar to "consists of" except that the subject in question, that is, a composition or a process, may contain additional composition components or additional procedure steps which do not affect the technical effect provided by said subject as defined in the context of the invention. In particular embodiments, the term "essentially consists" refers to the term "consists", such that the term "consists" is a preferred embodiment of the term "essentially consists", which contemplates the presence of additional components or steps provided that the presence of said components or additional steps does not substantially modify the technical effect of the composition or procedure of the invention, while the term "consists" does not contemplate the presence of said compounds or additional steps, but that the composition or procedure described is limited to the components or steps described in the description.

In the context of the invention, the term "microballs" refers to balls suitable for transmitting mechanical forces in ball mills. Such balls are known in the art.

In the context of the invention, the term "whitening agent" refers to a substance that is added to a formulation to increase its degree of whiteness. The degree of whiteness can be measured by determining the color coordinates in the CIELab color space according to methods known in the art.

In the context of the invention, the term "opacifying agent" or "opacifying pigment" refers to a substance that is added to a formulation to increase its opacity. A known example of an opacifying agent for paints is titanium oxide.

In the context of the invention, the term "heat dissipating agent" refers to a substance that is added to a formulation so that this formulation has a greater capacity to transmit heat.

As mentioned above, a first aspect of the invention relates to a hierarchical composite material comprising:
- one or more cores, each core being formed by a mineral particle comprising a material selected from the group consisting of talc, calcium carbonate, calcium silicate, calcium sulfate and aluminosilicates and having a particle size of between 1 and 15 µm; and
- a discontinuous layer of titanium oxide particles dispersed on the surface of each mineral core, the titanium oxide particles having a particle size of between 100 and 1000 nm, such that the amount of titanium oxide is between 5 % and 30% by weight of the composition,
characterized in that the hierarchical composite material does not comprise any dispersing agent suitable for dispersing the titanium oxide particles on the surface of the mineral core and because the titanium oxide particles are not substantially aggregated together. Likewise, the hierarchical material of the first aspect of the invention is characterized in that it does not contain any dispersing agent. In preferred embodiments, it is considered that "the titanium oxide particles are not substantially aggregated together" when the core formed by a mineral particle is covered by a greater number of individual titanium oxide particles or aggregates of up to 5 oxide particles of titanium than aggregates of titanium oxide particles comprising 6 or more titanium oxide particles. As indicated above, the inventors have found that this specific distribution of titanium oxide particles together with the absence of a dispersing agent provides a composite material with higher reflectance and greater opacifying potential than composite materials free of dispersing agent and with titanium oxide particles added to each other.

As indicated above, each nucleus formed by a mineral particle comprises a material selected from the group consisting of talc, calcium carbonate, calcium silicate, calcium sulfate and aluminosilicates where aluminosilicates refer to feldspar materials, as such as orthoclase (KAISi₃O₈), albite (NaAlSi₃O₈) and anorthite (CaAl₂Si₂O₈), clay materials, such as kaolinite, smectite or illite, and zeolite materials. In a particular embodiment of the first aspect of the invention, the core formed by a mineral particle comprises talc or calcium carbonate. In a particular embodiment of the first aspect of the invention, the core formed by a mineral particle consists of talc or calcium carbonate.

In another particular embodiment of the first aspect of the invention, the core formed by a mineral particle comprises calcium carbonate. More particularly, the nucleus formed by a mineral particle consists of calcium carbonate.

It is a preferred embodiment of the first aspect of the invention that the core formed by a mineral particle represents between 70% and 95% by weight of the weight of the composite material.

In another particular embodiment of the first aspect of the invention, the core formed by a mineral particle has a particle size of between 1 and 12 µm, more particularly between 2 and 6 µm.

In another particular embodiment of the first aspect of the invention, the core formed by a mineral particle consists of calcium carbonate and has a particle size of between 1 and 12 µm, more particularly between 2 and 6 µm.

In another particular embodiment of the first aspect of the invention, the core formed by a mineral particle has a particle size of between 3 and 12 µm, more particularly between 3 and 6 µm.

In another particular embodiment of the first aspect of the invention, the core formed by a mineral particle consists of calcium carbonate and has a particle size of between 3 and 12 µm, more particularly between 3 and 6 µm.

In another particular embodiment of the first aspect of the invention, the core formed by a mineral particle consists of calcium carbonate and has a particle size of 4.2 µm.

In another particular embodiment of the first aspect of the invention, the core formed by a mineral particle consists of calcium carbonate and has a particle size of 5.0 µm.

In another particular embodiment of the first aspect of the invention, the core formed by a mineral particle consists of talc.

In another particular embodiment of the first aspect of the invention, the core formed by a mineral particle consists of talc and has a particle size of 10.0 µm.

In another particular embodiment of the first aspect of the invention, the titanium oxide particles represent 5%, 10%, 15%, 20%, 25% or 30% of the weight of the material.

In another particular embodiment of the first aspect of the invention, the titanium oxide particles represent between 10% and 25% of the weight of the material. The inventors have discovered that this titanium oxide load facilitates the presence of a discontinuous layer of titanium oxide particles on the surface of the particle of the core formed by a mineral particle and that the number of particles added to each other is minimized.

In another particular embodiment of the first aspect of the invention, the titanium oxide particles represent 10%, 15%, 20% or 25% of the weight of the material.

In another particular embodiment of the first aspect of the invention, the size of the titanium oxide particles is between 100 and 600 nm, preferably between 200 and 400 nm, and more preferably 300 nm.

In another particular embodiment, the first aspect of the invention relates to a hierarchical composite material consisting essentially of a core formed by a mineral particle as defined in any of the particular and preferred embodiments defined above and a layer discontinuous of titanium oxide particles dispersed on the surface of said mineral core in which the titanium oxide particles are defined as in any of the particular and preferred embodiments defined above.

Likewise, a particular embodiment of the first aspect of the invention relates to a hierarchical composite material that essentially consists of a core formed by a mineral particle that consists of talc or calcium carbonate and has a particle size of between 1 and 12 µm, titanium oxide particles represent between 10% and 25% of the weight of the material and the size of titanium oxide particles is between 200 and 400 nm.

In another particular embodiment, the first aspect of the invention relates to a hierarchical composite material consisting of a core formed by a mineral particle defined as in any of the particular and preferred embodiments defined above and a discontinuous layer of titanium oxide particles dispersed on the surface of said core formed by a mineral particle in which the titanium oxide particles are defined as in any of the particular and preferred embodiments defined above.

Likewise, a particular embodiment of the first aspect of the invention relates to a hierarchical composite material that consists of a core formed by a mineral particle that consists of talc or calcium carbonate and has a particle size between 3 and 12 µm, titanium oxide particles represent between 10% and 25% of the weight of the material and the size of titanium oxide particles is between 200 and 400 nm.

Thus, a particular embodiment of the first aspect of the invention relates to a hierarchical composite material consisting of a core formed by a mineral particle consisting of talc and having a particle size of between 10.0 µm, titanium oxide particles account for 10% to 25% of the weight of the material, and the size of titanium oxide particles is 300 nm.

Another particular embodiment of the first aspect of the invention relates to a hierarchical composite material consisting of a core formed by a mineral particle consisting of calcium carbonate and having a particle size of 4.2 µm or 5 .0 µm, titanium oxide particles account for 10% to 25% of the weight of the material, and the size of titanium oxide particles is 300 nm.

In another particular embodiment of the first aspect of the invention, the particle size of the core formed by a mineral particle is between 10 to 20 times the particle size of the titanium oxide.

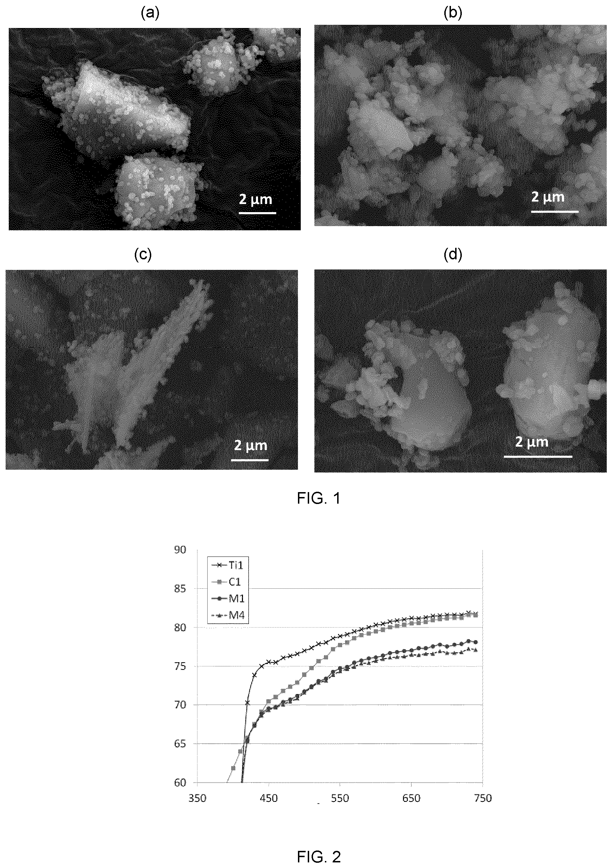

As mentioned above, the composite material of the invention interacts with light such that the composite material reflects light in a wide range of wavelengths, as shown in the examples and in the Figures 2 to 4. In particular, the person skilled in the art will appreciate that, the greater the light reflectance in the visible light range, the greater the whitening character of the composite material. Likewise, it is preferred that the composite material of the invention is characterized by a light reflectance equal to or greater than 65% in the wavelength range between 450 and 800 nm. It is more preferred that the composite material of the invention is characterized by a light reflectance equal to or greater than 70% in the wavelength range between 450 and 800 nm. It is even more preferred that the composite material of the invention is characterized by a light reflectance equal to or greater than 80% in the wavelength range between 450 and 800 nm.

In a particular embodiment, the hierarchical composite material is characterized in that it reflects an amount greater than 70% of a light of wavelength between 600 nm and 800 nm. In a more particular embodiment, the hierarchical composite material is characterized in that it reflects an amount greater than 76% of light of wavelength between 600 nm and 800 nm.

A method of preparing the composite material of the first aspect of the invention is also part of the invention. Likewise, a second aspect of the invention refers to a process for preparing a hierarchical composite material that comprises the steps of:
(i) providing a solid mixture with a moisture content of less than 0.05% by weight of the mixture comprising (a) one or more minerals in the form of particles of size between 1 and 15 µm comprising a selected material from the group consisting of talc, calcium carbonate, calcium silicate, calcium sulfate and aluminosilicates, and (b) titanium oxide in the form of particles having a size between 100 and 1000 nm and in such an amount that the amount of titanium oxide represents 5% to 30% by weight of said mixture, the solid mixture being characterized by not containing any dispersing agent suitable for dispersing the titanium oxide particles on the surface of the one or more minerals;
(ii) subjecting the mixture provided in step (i) to mechanical forces to disperse the titanium oxide particles over the particle surface of the one or more minerals.

The second aspect of the invention contemplates that the solid mixture provided in step (i) has a moisture content of less than 0.05% by weight of the mixture. This aspect is essential, since the absence of humidity prevents the agglomeration of the titanium oxide particles among themselves, as shown in the examples, and favors the substantially isotropic dispersion of the titanium oxide particles on the surface of the core particle formed by a mineral particle.

Likewise, in a particular embodiment, the second aspect of the invention contemplates that the components of the solid mixture provided in (i) are subjected to a stage prior to stage (i) consisting of a heat treatment for the elimination of humidity. Said thermal treatment aims to ensure that the particles have a moisture content of less than 0.05% by weight. To achieve this percentage of humidity or a lower percentage, for example, a treatment in an infrared oven at 120 °C for 5 minutes can be carried out. Other drying methods will be apparent to the person skilled in the art. The components of the solid mixture can be subjected to said heat treatment individually, or as a mixture of two or more components.

In a particular embodiment of the second aspect of the invention, the solid mixture provided in step (i) consists essentially of the titanium oxide particles and the particles of the one or more mineral. In a more particular embodiment of the second aspect of the invention, the solid mixture provided in step (i) consists of the titanium oxide particles and the particles of the one or more mineral.

In a particular embodiment of the second aspect of the invention, the one or more mineral of the solid mixture provided in step (i) is defined in the same way as the nucleus formed by a mineral particle in the particular and preferred embodiments of the first aspect of the invention.

Likewise, in a particular embodiment of the second aspect of the invention, the mineral of the solid mixture of step (i) comprises talc or calcium carbonate, preferably calcium carbonate. In a more particular embodiment of the second aspect of the invention, the mineral of the solid mixture of step (i) consists of talc or calcium carbonate, preferably calcium carbonate.

Likewise, in a particular embodiment of the second aspect of the invention, in the solid mixture of step (i), the particles of the one or more mineral have a particle size of between 1 and 12 µm, more particularly between 2 and 6 µm.

It is preferred that in the solid mixture of step (i) of the second aspect of the invention, the one or more minerals comprise calcium carbonate and have a particle size of between 2 and 6 µm. It is more preferred that in the solid mixture of step (i) of the second aspect of the invention, the one or more minerals consist of calcium carbonate and have a particle size of between 2 and 6 µm.

It is also preferred that in the solid mixture of step (i) of the second aspect of the invention, the one or more minerals represent between 70% and 95% by weight of the weight of the solid mixture.

In another particular embodiment of the second aspect of the invention, the titanium oxide particles of the solid mixture provided in step (i) are defined in the same way as the titanium oxide particles in the particular and preferred embodiments of the first aspect of the invention.

In other particular embodiments of the second aspect of the invention, in the solid mixture of step (i), the titanium oxide particles represent between 10% and 25% of the weight of the solid mixture.

In other particular embodiments of the second aspect of the invention, in the solid mixture of step (i), the titanium oxide particles represent 5%, 10%, 15%, 20%, 25% or 30 % of the weight of the solid mixture.

In other particular embodiments of the second aspect of the invention, in the solid mixture of step (i), the titanium oxide particles represent 10%, 15%, 20% or 25% of the solid mixture.

In other particular embodiments of the second aspect of the invention, in the solid mixture of step (i), the size of the titanium oxide particles is between 100 and 600 nm, preferably between 200 and 400 nm, more preferably 300 nm.

In other particular embodiments of the second aspect of the invention, in the solid mixture of step (i), the particle size of the one or more mineral is between 10 to 20 times the particle size of the oxide of titanium.

Likewise, the solid mixture provided in step (i) of the process of the second aspect of the invention is particularly one wherein:
- the one or more minerals of the solid mixture of step (i) consists of talc or calcium carbonate, preferably calcium carbonate;
- the particles of the one or more mineral have a particle size between 1 and 12 µm; more particularly between 2 and 6 µm,
- the one or more minerals represents between 70% and 95% by weight of the weight of the solid mixture,
- the titanium oxide particles represent from 5% to 30% by weight of said mixture, particularly from 10% to 25%, and
- the size of the titanium oxide particles is between 100 and 600 nm, preferably between 200 and 400 nm, more preferably 300 nm.

In another particular embodiment of the second aspect of the invention, the solid mixture provided in step (i) of the process of the second aspect of the invention is particularly one wherein:
- the one or more minerals of the solid mixture of step (i) consists of calcium carbonate,
- the particles of the one or more minerals have a particle size of 4.2 µm or 5 µm,
- the one or more minerals represents between 75% and 90% by weight of the weight of the solid mixture,
- the titanium oxide particles represent 10% to 25% by weight of said mixture, and
- the size of titanium oxide particles is 300 nm.

Step (ii) of the second aspect of the invention can be carried out by methods known in the art. Low shear force application methods are particularly useful for dispersing titanium oxide particles over the surface of the one or more mineral that forms the core of the hierarchical material. In particular, the mechanical forces used in step (ii) of the process of the invention comprise friction, attrition and abrasion. These types of forces can be applied, among other methods, through ball or microball milling procedures or through high mechanical shear procedures or through resonant acoustic generators. In these processes, the impact of the balls or microballs with the solid particles, the mechanical shear elements or resonance facilitate the application of mechanical forces on the particles, so that the adhesion energy between particles is overcome. Without being bound to a particular scientific theory, the inventors confirm that said adhesion energy between the particles is exceeded when the acceleration of the particles reaches at least 8 times g, where g is the gravitational acceleration, approximately 9.81 m/s².

Ball or microball milling processes can be carried out in the presence or absence of solvent. However, it is essential that the process of the second aspect of the invention is carried out in the absence of solvent, in particular water. In addition to promoting the dispersion of titanium oxide particles homogeneously on the surface of the one or more mineral that forms the core of the hierarchical composite material, the absence of solvent facilitates the separation of the reaction product by eliminating a filtration step and /or evaporation of the solvent and/or drying of the product. By saving these steps, the process of the second aspect of the invention allows savings in raw materials and energy, in addition to providing a material with improved opacifier properties.

Likewise, in a particular embodiment, step (ii) is carried out by dry milling. The term "dry milling" refers to a milling procedure, possibly assisted by balls or microballs, which takes place in the absence of solvent, using a substantially dry mixture of solids as a precursor. A substantially dry mixture is understood to contain a moisture content such that it represents less than 0.05% by weight of the mixture.

Likewise, step (ii) is carried out in the absence of water, that is, without adding water to any traces of moisture present in the solid mixture.

As mentioned above, the dry milling process can be carried out in the presence of balls or microballs. It is preferred that the balls or microballs are made of a ceramic material, such as Y-TZP.

In a particular embodiment of the second aspect of the invention, dry milling is carried out in the presence of microballs with a density greater than or equal to 3 g/cm³ and a diameter between 1 and 3 mm, preferably 2 mm in diameter. diameter.

In another particular embodiment of the second aspect of the invention, dry milling is carried out at a mill speed of between 200 and 600 rpm.

In another particular embodiment of the second aspect of the invention, the process further comprises the step (c) of separating in the product of step (b) the hierarchical composite material from the components of size greater than 200 µm, for example by sieving through a mesh. This step in particular allows the balls or microballs to be separated from the hierarchical composite material of the present invention.

Steps (i) and (ii) of the second aspect of the invention are independent of each other, so that particular and preferred embodiments relating to steps (i) and (ii) can be combined with each other. Said combinations form part of the second aspect of the invention.

As indicated above, a third aspect of the invention refers to a hierarchical composite material obtainable by the process according to the second aspect of the invention. In particular, the third aspect of the invention refers to a hierarchical composite material obtainable by the process according to any of the particular and preferred embodiments of the second aspect of the invention.

As the skilled in the art person will deduce, particular and preferred embodiments of the third aspect of the invention refer to the material prepared according to the method in which the components of the solid mixture of step (i) are defined as in any particular or preferred embodiment of the second aspect of the invention. Likewise, particular and preferred embodiments of the third aspect of the invention refer to the material prepared according to the method in which step (ii) is defined as in any particular or preferred embodiment of the second aspect of the invention.

The material of the first or third aspect has optical and spectroscopic properties that make it useful for use in paint formulation. In particular, the inventors have found that these particles make it possible to increase the opacity of a paint in an unexpected way. The use of the hierarchical composite material in paint formulation also allows achieving degrees of whiteness similar to paints that use titanium oxide, using a smaller amount of titanium oxide. Therefore, the use of the hierarchical composite material of the invention in paint formulation allows savings in titanium oxide, reducing the manufacturing cost of the paint. Likewise, the fourth aspect of the invention refers to the use of the hierarchical composite material of the first or third aspect as a whitening and/or opacifying agent in paint formulation.

Thus, the fifth aspect of the invention refers to a paint composition comprising the hierarchical composite material of the invention, as defined in the first or third aspect of the invention.

In preferred embodiments, the paint composition of the fifth aspect of the invention comprises a hierarchical composite material as defined in any of the particular or preferred embodiments of the first or third aspect of the invention defined above.

It is preferable that the paint composition comprises between 1% and 15% by weight of the hierarchical composite material of the first or third aspect of the invention. Preferably, the paint composition comprises between 1% and 10% by weight of the hierarchical composite material of the first or third aspect of the invention. It is further contemplated that the paint composition comprises more than one type of hierarchical composite material as defined in any of the first or third aspects of the invention.

In preferred embodiments of the fifth aspect of the invention, the paint composition further comprises a paint base. Base paint compositions are known in the art. Water-based acrylic paint compositions are preferred.

The paint base may further comprise a filler of mineral compounds, such as calcium carbonate and/or talc. Said load of mineral compounds represents in particular embodiments up to 50% by weight of the mineral base composition. The weight ratio of calcium carbonate to talc can be between 0:1 to 1:1.

The paint composition of the fifth aspect of the invention further comprises additives known in the art for these paint formulations. Such additives may include surfactants, adhesion agents, antifoam agents, preservative agents and dispersing agents. The person skilled in the art will know how to select the additives based on the target application of the paint composition.

In another particular embodiment of the invention, the paint composition of the fifth aspect of the invention further comprises one or more colorants, preferably in an amount of 1% to 5% by weight of each colorant included in the composition.

The inventors have discovered that the combination of the composite material of the invention with a dye makes it possible to surprisingly increase the color performance of said dye, particularly in pastel tones (that is, with low dye loads). This makes it possible to advantageously reduce the amount of colorant or pigment required in the paint to achieve a certain coloration, thus reducing the manufacturing cost of the paint composition.

Pigments or colorants useful in forming colored paints are known in the art and will be apparent to the person skilled in the art. In particular embodiments of the fifth aspect of the invention, the pigment is selected from Blue 789, Light Yellow 794, Emerald Green 792, Vermillion 790 and mixtures thereof.

The inventors have discovered that the composite material of the invention is useful for reflecting infrared light and thus acting as a heat dissipating agent when incorporated into polymer matrices, which do not have as much capacity to reflect said light. Likewise, in a sixth aspect, the invention refers to the use of the hierarchical composite material of the first or third aspect as a heat dissipating agent and/or opacifying agent in plastic formulation.

Finally, a seventh aspect of the invention refers to a polymer composition suitable for forming plastic products by thermoforming that comprises a hierarchical composite material according to the first or third aspect of the invention.

In a particular embodiment, the composition of the seventh aspect of the invention is suitable for forming plastic films or sheets.

In another particular embodiment, the composition of the seventh aspect of the invention is suitable for forming plastic products by extrusion, preferably, it is suitable for forming films by extrusion.

In particular embodiments, the polymer suitable for forming plastic products by thermoforming is one of ABS, EVA, polyethylene, polypropylene, polycarbonate, EVA, PVC, acrylic polymers (such as PMMA), polyethylene terephthalate (PET), polyesters, polyurethanes , polystyrene, biopolymers such as polylactic acid (PLA), polycaprolactone (PCL), polysaccharides, polyvinyl alcohol (PVA), celluloids, thermoplastic starch, polyterpenes, polyhydroxyalkanoates, polybutylene succinate (PBS), as well as their mixtures and combinations. In particular, the polymer is polyethylene, preferably it is low density polyethylene.

In particular embodiments, the composition of the seventh aspect of the invention comprises the hierarchical material of the first or third aspect of the invention in an amount of between 1% and 5% by weight; preferably 1.5% or 3% by weight.

In particular embodiments, the composition of the seventh aspect of the invention further comprises titanium oxide preferably in an amount of between 1% and 5% by weight.

The composition of the seventh aspect of the invention may further comprise one or more additives suitable for the formulation of polymeric preparations suitable for thermoforming. Such additives will be apparent to the expert in the formulation of polymeric preparations suitable for thermoforming. In particular, these additives include dispersing agents, hardening agents, slip agents and colorants.

In order to facilitate the understanding of the preceding ideas, some examples of the experimental procedures and examples of embodiments of the present invention are described below. These examples are merely illustrative and not limiting.

### EXAMPLES

To obtain hierarchical composite materials, the starting raw materials based on TiOµ dioxide, calcium carbonates and talc described in Table 1 were used.

**Table 1. Characteristics of the starting materials.**

| Name | Chemical Formula | D50 (µm) | Humidity % | L* (c) | a* (c) | b* (c) |
|---|---|---|---|---|---|---|
| Ti1 | TiO_{2 (rutile)} | 0.3±0.2 | 0.4 | 91.21 | -0.08 | 3.29 |
| C1 | CaCO₃ | 5.0±1.0 | 0.1 | 90.53 | -0.42 | 5.91 |
| C2 | CaCO₃ | 4.2±1.0 | 0.3 | 93.86 | -0.11 | 1.22 |
| Ta1 | Mg₃Si₄O₁₀(OH)₂ | 10.0±1.0 | 0.5 | 91.94 | -0.44 | 2.28 |

The average particle size (D50) was determined by laser diffraction (Mastersizer S, Malvern). The relative humidity of each solid material was determined in % by weight using an IR heating scale at 120°C in 2 minutes (PMB Moisture Analyzer from the AE ADAM commercial company). The chromatic coordinates in the CIELab colorimetric space were determined using a Konica Minolta Spectrophotometer 2500D colorimeter, and the program used to analyze the data was the Color Data Software CM-S100W Spectramagic NX Pro.USB. This chromatic model is based on three parameters: L*(c) which indicates the degree of black, 0, to white, 100; a*(c) from green, negative values, to magenta, positive values; and b*(c) from blue, negative values, to yellow, positive values. In the measurements carried out, the specular component has not been taken into account.

### Example 1: Preparation of hierarchical composite materials by dry milling.

### General procedure 1:

From the raw materials, the hierarchical composite materials M1 to M3 described in Table 2 were prepared following general procedure 1, which consists of the following steps:
a) Heating the raw materials of the composite material indicated in Table 1 and in the quantities indicated in Table 2 in a laboratory oven at 60°C for 2 hours;
b) dry mixing of the raw materials obtained in a) in a 10 L capacity biconical mixer for 1 hour adding Y-TZP microballs of 2 mm diameter;
c) sieving of the mixture obtained in b) using a 200 µm mesh sieve.
In stage a) of the process, the dry product was characterized by having a relative humidity <0.05% by weight for the different materials, specifically a humidity of 0.01% was determined for Ti1, C1 and Ta1; and a humidity of 0.02% for C2.

The results of the chromatic coordinates of the hierarchical composite materials thus prepared are shown in Table 2.

### Comparative example 1: Preparation of composite materials by milling process in aqueous phase

### General procedure 2:

The composite materials M4 and M5 described in Table 2 were prepared using the same proportions and same materials as in the preparation of the hierarchical composite materials M1 and M2, respectively, but following a process that consists of milling the mixture using a microball mill in an aqueous phase. Water was used as a solvent in a solids:water ratio of 1:1.5 by weight. Y-TZP balls with a diameter of 2 mm were used. The stirring speed of the mill was 400 rpm and milling was carried out for 1 hour. The resulting product was sieved through a 500 µm mesh to separate the microbeads from the aqueous suspension and dried in a laboratory oven at 60°C for 24 hours until the water was eliminated. Once dry, the composite material was sieved through a 200 µm sieve.
Table 2 below summarizes the prepared materials, as well as the chromatic coordinates of the materials obtained.

**Table 2. Formulation of materials and chromatic coordinates thereof. The calculation of ΔL*(c) and ΔE*ab(c) is carried out with respect to the chromatic coordinates of Ti1**

| Name | Ti1 (g) | Mineral | Mineral (g) | Milling type | L* (c) | a* (c) | b* (c) | ΔL*(c) | ΔE*ab(c) |
|---|---|---|---|---|---|---|---|---|---|
| M1 | 300 | C1 | 1700 | dry | 89.94 | -0.33 | 4.15 | -1.27 | 1.56 |
| M2 | 300 | C2 | 1700 | dry | 93.58 | -0.24 | 2.63 | 2.37 | 2.46 |
| M3 | 300 | Ta1 | 1700 | dry | 87.36 | -0.16 | 2.78 | -3.84 | 3.88 |
| M4 | 30 | C1 | 170 | water | 89.02 | -0.29 | 4.40 | -2.19 | 2.46 |
| M5 | 30 | C2 | 170 | water | 91.94 | -0.10 | 2.52 | 0.73 | 1.06 |

The hierarchical composite materials obtained according to the process of the invention were characterized by presenting variations in chromatic coordinates depending on the type of mineral used and the dispersion method. Some CieLab coordinates where the changes in chromatic coordinates ΔL*(c) that are related to the degree of whiteness-darkness as well as ΔE*ab(c) that indicates changes in the color coordinate a*(c), which correspond with variations from red (+a) to green (-a), and the color coordinate b*(c), which correspond to variations from yellow (+b) to blue (-b).

The dry dispersion process was shown to be more effective than the water dispersion process as observed in the ΔL values since the hierarchical composite materials obtained by dry milling in the biconical mixer presented better results than the composite materials obtained by wet milling in terms of whiteness. In terms of chromatic coordinates, variations of ΔL*(c) with values between 0 and 1 are not very significant, variations with values between >1 and <2 can be appreciated by ad hoc equipment, variations >2 and <3 are appreciated by a trained specialist and variations >4 are easily appreciated.

### Electron Microscopy

Additionally, it was examined by scanning electron microscopy (FE-SEM S-4700, Hitachi) to analyze the size and distribution of the particles in more detail. Figure 1 shows the characteristic microstructure of the hierarchical composite materials M1, M2 and M3, which consisted of a core of mineral particles covered by smaller particles that correspond to dispersed TiO₂ particles. This type of microstructure is defined as hierarchical composite materials, where smaller TiO₂ particles are distributed on the surface of the mineral that constitutes the core of the composite material. For comparative purposes, the microstructure of the comparative composite material M4 presented a mixture of components in a process in the presence of water does not produce the same hierarchical microstructure, since the TiO₂ particles present a greater degree of aggregation among themselves, so the layer that forms titanium oxide is not homogeneous. This aspect represents an advantage for dry dispersion methodologies since the absence of water avoids both its consumption and subsequent thermal processes for its elimination. In this way, the dry dispersion process is more sustainable and environmentally friendly as it reduces the consumption of water and energy resources. Furthermore, as shown in Figure 1 by comparison of Figures 1(a)-(c) with Figure 1(d), the dry milling process allows the titanium oxide particles to be distributed over the surface of the core formed by a mineral particle, minimizing the aggregation of these among themselves without having to use additional dispersing agents, as described in the state of the art.

It is believed that this isotropic distribution of titanium oxide particles on the mineral surface provides unique properties to the hierarchical composite materials thus obtained in terms of their interaction with light.

### UV-Vis spectroscopy

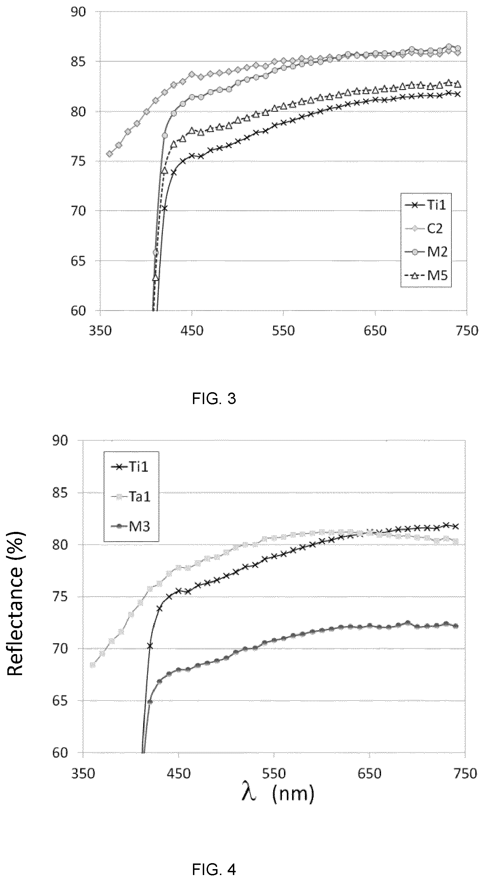

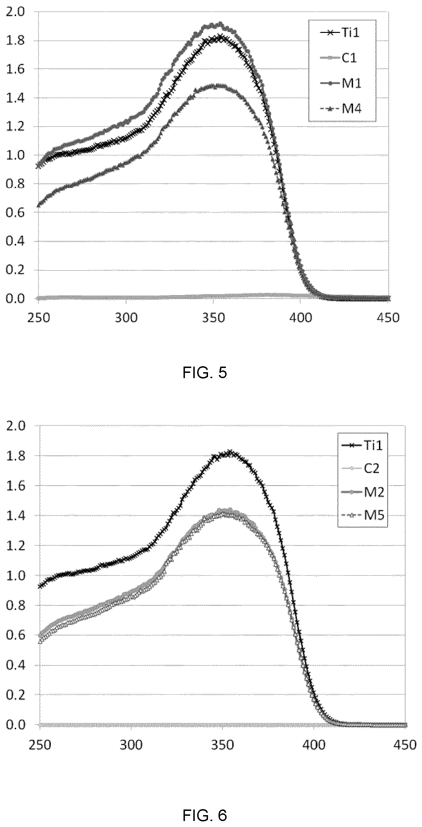

The behavior of the hierarchical composite materials of the invention has been studied in terms of spectrum absorption in the UV region (250-400 nm) and reflection in the visible region of the spectrum (400-750 nm). Figures 2 to 7 describe the reflection and absorbance as a function of the wavelength of the samples M1, M2, and M3, and also compare the separate behavior of the components of these materials. As shown in Figures 2 and 3, the hierarchical composite materials M1 and M2 present an improved effect on TiO₂ in both visible reflection and UV absorption compared to the same compositions processed by dispersion in water. In particular, the result of a higher UV absorbing capacity of M1 compared to Ti1, improving by 17% in absorbance at the absorbance peak, is an unexpected result given that the hierarchical composite material M1 only contains 15% in weight of UV photon absorbing particles. For comparison purposes, the M4 composite material of the same composition prepared by a micromilling dispersion process in the aqueous phase presents a -12% decrease in absorbance in the absorbance peak (Figure 2).

The comparative composite materials M4 and M5 prepared by a micromilling dispersion process in the aqueous phase present reflectance values in the spectral range of 400 to 700 nm, which are lower than the hierarchical composite materials M1 and M2 made by the present invention. This characteristic is advantageous for M1 and M2 and is a consequence of the hierarchical microstructure of said materials.

Table 3 provides some numerical reflectance values of the prepared samples as well as the raw materials used in the synthesis of the samples:

**Table 3:**

| | **Reflectance (%)** | | | | | | | | |
|---|---|---|---|---|---|---|---|---|---|
| **λ** | **Ti1** | **C1** | **C2** | **Ta1** | **M1** | **M2** | **M3** | **M4** | **M5** |
| 400 nm | 33.31 | 61.84 | 79.98 | 73.29 | 35.90 | 42.62 | 35.84 | 39.11 | 41.46 |
| 500 nm | 77.00 | 73.91 | 84.16 | 79.22 | 71.77 | 82.86 | 69.1 | 71.61 | 79.13 |
| 600 nm | 80.31 | 79.47 | 85.42 | 81.19 | 76.15 | 85.21 | 71.74 | 75.73 | 81.53 |
| 700 nm | 81.60 | 81.13 | 85.78 | 80.69 | 77.56 | 86.02 | 72.08 | 76.73 | 82.63 |

The results in Table 3 show, by comparison of M1 with M4 and M2 with M5, that the hierarchical composite materials of the invention provide greater light reflectance than the comparative composite materials because the titanium oxide particles do not are distributed homogeneously on the surface of the nucleus formed by a mineral particle.

Table 4 provides the UV-Vis absorption peak data of the prepared samples as well as the raw materials used in the synthesis of the samples:

**Table 4. Maximum absorbance values (Abs) of raw materials and composite materials and the wavelength (λ) at which they occur**

| | **Absorbance** | | | | | | | | |
|---|---|---|---|---|---|---|---|---|---|
| | **Ti1** | **C1** | **C2** | **Ta1** | **M1** | **M2** | **M3** | **M4** | **M5** |
| **Abs** | 1.64 | 0.02 | - | - | 1.92 | 1.43 | 1.59 | 1.49 | 1.41 |
| **λ (nm)** | 365 | 365 | - | - | 354 | 351 | 351 | 352 | 350 |

### Example 2: Preparation of various composite materials with various titanium oxide fillers

Several hierarchical composite materials were prepared using C1 as core mineral particle and Ti1 as titanium oxide, varying the titanium oxide content (for compositions between 5 and 30% by weight) and following the general procedure 1 described in Example 1. Table 5 describes the various M6-M9 materials prepared. The chromatic coordinates of the materials thus obtained were also measured:

**Table 5. Formulation of composite materials based on C1 and with different percentages of Ti1, and their chromatic coordinates. The calculation of ΔL*(c) and ΔE*ab(c) is carried out with respect to the chromatic coordinates of Ti1**

| Name | Ti1 (g) | C1 (g) | L* (c) | a* (c) | b* (c) | ΔL*(c) | ΔE*ab(c) |
|---|---|---|---|---|---|---|---|
| M6 | 100 | 1900 | 90.26 | -0.39 | 5.34 | -0.95 | 2.28 |
| M7 | 200 | 1800 | 87.47 | -0.09 | -0.18 | -3.74 | 5.10 |
| M1 | 300 | 1700 | 89.94 | -0.33 | 4.15 | -1.27 | 1.56 |
| M8 | 400 | 1600 | 87.98 | -0.14 | 4.16 | -3.23 | 3.35 |
| M9 | 600 | 1400 | 87.68 | -0.03 | 4.18 | -3.53 | 3.64 |

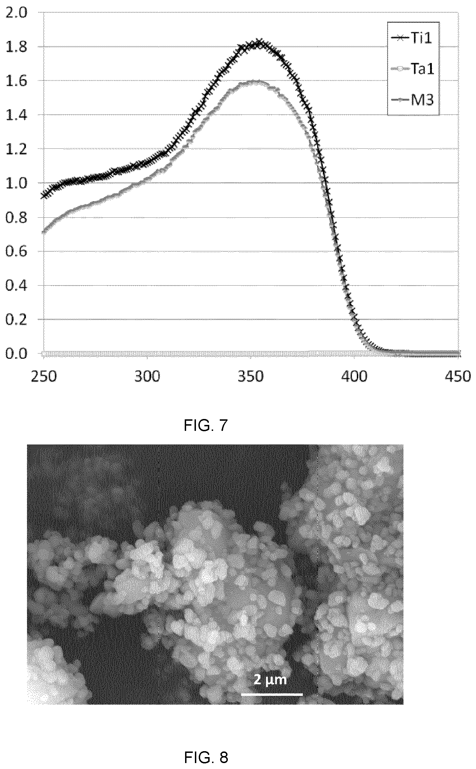

Figure 8 shows that the hierarchical composite material M9, which contains 30% by weight of titanium oxide, is characterized by presenting a hierarchical coating of TiO2 particles on the calcium carbonate mineral C1. Said coating is discontinuous and the presence of small agglomerates of TiO₂ particles is observed that comprise a number of particles between 4-8 units, indicating that the dispersion limit has been reached. The chromatic coordinates of the composite materials showed greater efficiency in dispersion for samples with % by weight of titania between 5 and 20% by weight, with percentages between 10 and 15% by weight being the compositions with the highest value of chromatic coordinate L*(c) and greater value of ΔL*(c) and ΔE*ab(c) with respect to Ti1.

### Example 3: Preparation and testing of paint formulations

Paints were prepared with formulations that include a base paint and the addition of opacifying pigments or the hierarchical composite materials of the present invention, as described in Table 6. Different percentages of addition of both the opacifier and the TiO₂ as the opacifier based on the hierarchical composite materials of the present invention. For comparative purposes, the equivalent proportions of the raw materials are also used without forming the composite material and directly added in the paint formulation or, on the other hand, the addition in the formulation of comparative composite materials processed by wet phase milling routes.

As a base paint, two types of commercial paints were evaluated, consisting of acrylic paints with a mineral filler of 47% by weight of solids composed of calcium carbonate for Base1 and a 50/50 mixture of calcium carbonate and talc for Base2. Base paint 1 (Pintura Matedur, Pinturas Diamant S.L.) was selected because it is a standard wall paint and Base paint 2 (Pintura Matedur BL, Pinturas Diamant S.L.) was selected because it is a decoration paint with high whiteness. In the two base paints used, Base1 and Base2, an excess of 10% by weight of water was added as a prior step to the addition of the opacifying pigments such as TiO₂ or the opacifying hierarchical composite materials of the present invention. In all cases, the paint preparation procedure for incorporating the opacifying pigment consisted of stirring using a stirrer with a variable frequency drive and using a 4 cm diameter stirrer for 4 minutes at a speed of 1000 rpm. The volume of paint prepared was in all cases 500 ml.

The paint prepared in this way was applied following the ASTM D 823-E standard for monolayer paints using the Elcometer 3550 single-sided film applicator. The application of the paint was carried out to obtain a film thickness of 50 µm wet using an applicator (RK Printcoat Instrument K101 Multi-Applicator), on opacity charts ("opacity charts", Leneta2A (Elcometer 4695)) measuring 140x254 mm. The paint film was applied at a speed of 4/10 using a bar 5. The applied paint was force-dried using a 2000 W hot air stripper at a temperature of 350 °C, 300 L/min, for 5 seconds.

The color coordinates in CieLab space and the opacity parameters were determined using the functions of a Konica Minolta CM-23d Colorimeter that is based on the ISO 7244 standard. The opacity, defined as RK, is determined as the ratio between the reflectance of the paint on black cardboard and the reflectance on white cardboard. This RK ratio is multiplied by 100 and thus the closer its value is to 100, the opacity is indicating the ability of the paint to hide the background.

**Table 6. Formulation of paints and their chromatic coordinates. In the formulations, the percentage in number and the type of hierarchical composite material are expressed in parentheses. When two hierarchical composite materials are used, they are expressed as the sum of the individual hierarchical composite materials marked with "+".**

| Paint | Base Paint | TiO₂ % | Composite material quantity % | L*(c) | a*(c) | b*(c) | RK | TiO₂ total added % |
|---|---|---|---|---|---|---|---|---|
| P1 | Base1 | 0 | - | 93.20 | -1.57 | 3.91 | 26.9 | 0 |
| P2 | Base1 | 3 | - | 93.80 | -1.19 | 3.52 | 60.6 | 3 |
| P3 | Base1 | 4 | - | 93.91 | -1.14 | 3.31 | 64.7 | 4 |
| P4 | Base1 | 8 | - | 94.52 | -1.01 | 2.63 | 77.3 | 8 |
| P5 | Base1 | 4 | 4 (M1) | 94.03 | -0.97 | 3.77 | 78.0 | 4.6 |
| P6 | Base1 | 4 | 4 (M4) | 94.67 | -1.03 | 2.95 | 72.4 | 4.6 |
| P7 | Base2 | 0 | - | 93.95 | -0.95 | 2.72 | 72.4 | 0 |
| P8 | Base2 | 8 | - | 95.29 | -0.81 | 1.78 | 89.3 | 8 |
| P9 | Base2 | 4 | 6 (M8) | 94.98 | -0.86 | 2.07 | 86.4 | 5.2 |
| P10 | Base2 | 3 | 4 (M8) | 95.22 | -0.79 | 1.89 | 89.4 | 4.25 |
| | | | +3 (M3) | | | | | |
| P11 | Base2 | 3 | 10 (M3) | 95.17 | -0.77 | 1.90 | 89.1 | 4.5 |
| P12 | Base2 | 3.75 | 14.25 (M3) | 95.43 | -0.72 | 1.55 | 90.2 | 5.89 |

Paints P5 and P6 differ from each other only in that P5 uses a hierarchical composite material prepared according to the process of the invention (M1 in Example 1) and P6 uses a composite material prepared according to the aqueous phase milling process from comparative example 1 (M4). The results show that, unexpectedly and surprisingly, the hierarchical composite material of the invention provides greater opacity (5.6%) to the formulated paint.

### Example 4. Application of hierarchical composite materials in colored paints.

Using paints P4 (standard paint with TiO₂ opacifier) and P5 (paint with a combination of TiO₂ opacifier and opacifying hierarchical composite material of the present invention, specifically) of Example 3, coloring pigments were added in different proportions by weight using the same paint preparation procedure using cowless agitation. The coloring pigments were pigment blue (Blue 789, TKROM), yellow (Light Yellow 794, TKROM), green (Emerald Green 792, TKROM) red (Vermilion 790, TKROM). Likewise, the characterization was carried out following the same procedure described in example 3. The results of the main chromatic coordinates are summarized in tables 7 to 10. For the blue color, the -b* coordinate has been selected, for the yellow color the coordinate +b*, for the color green the coordinate -a* and for red the coordinate +a*, because these coordinates correspond to the respective primary colors.

The results in the tables indicate that the use of the hierarchical composite materials of the present invention makes it possible to improve the color performance of the pigments used in the coloring of the paint layer both on a white background and on a black background. These results allow a reduction of between 30% and 50% by weight in the use of color pigments, giving rise to colored paints with greater color saturation and a decrease in pastel tones. The reduction in pigments for coloring paints therefore represents economic savings in terms of €/Kg of paint. In addition, it contributes to improving the sustainability of paints by reducing the consumption of raw materials and the energy used for the manufacture and transportation of said raw materials.

**Table 7. Coordinate b*(c) of the Cielab space for paints with the addition of blue pigment determined on opacity boards**

| | | % by weight of blue pigment in the paint | | | |
|---|---|---|---|---|---|
| Paint used | Opacity board | 1 | 2 | 4 | 5 |
| P4 | white | -20.6 | -30.8 | -35.3 | -36.0 |
| P5 | white | -22.6 | -35.5 | -39.2 | -39.6 |
| P4 | black | -17.0 | -26.7 | -31.7 | -32.5 |
| P5 | black | -18.0 | -30.8 | -35.0 | -35.4 |

**Table 8. Coordinate b*(c) of the Cielab space for paints with the addition of yellow pigment determined on opacity boards**

| | | % by weight of yellow pigment in the paint | | | |
|---|---|---|---|---|---|
| Paint used | Opacity board | 1 | 2 | 4 | 5 |
| P4 | white | 31.0 | 47.3 | 55.2 | 58.4 |
| P5 | white | 37.4 | 58.4 | 66.6 | 71.2 |
| P4 | black | 17.7 | 33.4 | 40.5 | 43.7 |
| P5 | black | 24.2 | 43.1 | 50.9 | 56.5 |

**Table 9. Coordinate a*(c) of the Cielab space for paints with the addition of green pigment determined on opacity boards**

| | | % by weight of green pigment in the paint | | | |
|---|---|---|---|---|---|
| Paint used | Opacity board | 1 | 2 | 4 | 5 |
| P4 | white | -20.6 | -30.8 | -35.3 | -36.0 |
| P5 | white | -22.6 | -35.5 | -39.2 | -39.6 |
| P4 | black | -17.0 | -26.7 | -31.7 | -32.5 |
| P5 | black | -18.0 | -30.8 | -35.0 | -35.4 |

**Table 10. Coordinate b*(c) of the Cielab space for paints with the addition of red pigment determined on opacity boards**

| | | % by weight of red pigment in the paint | | | |
|---|---|---|---|---|---|
| Paint used | Opacity board | 1 | 2 | 4 | 5 |
| P4 | white | 26.0 | 38.6 | 44.4 | 46.4 |
| P5 | white | 29.8 | 44.4 | 51.6 | 52.2 |
| P4 | black | 16.4 | 28.1 | 34.8 | 36.6 |
| P5 | black | 20.5 | 33.4 | 41.2 | 42.1 |

### Example 5: Application of composite materials in polymers.

The composite material M2 of the present invention was incorporated at 3% by weight in a polymeric film of linear low-density polyethylene (LDPE) called Film3. 1.5% by weight of M2 together with 1.5% by weight of TiO₂ to prepare a LDPE polymeric film called Film2. For comparative purposes, a formulation with 3% TiO₂ was used in the formulation called Film1 and a formulation without the addition of opacifying pigment and/or composite material, called Film0. To prepare film 2, 15 grams of the M2 material and 15 grams of the TiO₂ pigment were taken and mixed with 970 grams of micronized LLDPE (Sabic 118 NJ, from SABIC) in a single-screw extruder of a blown polymer film forming line (LF-250, Lab Tech Engineered LTD). The selected process conditions were 170°C temperature for the fusion of the polymer. In Film1 and Film3, the quantities corresponding to the dosage described in table 11 were dosed following a process analogous to that carried out for Film2. In Film0 the process followed was the same, but without incorporating pigment.

**Table 11 Formulations made of polymer sheets and the main parameters determined for opacity and UV-Vis light transmittance.**

| Name | % PELBD | % TiO₂ | % M2 | Thickness (µm) | RK | T (246 nm) % | T (432 nm) % |
|---|---|---|---|---|---|---|---|
| Film0 | 100 | 0 | 0 | 50 | 15.4 | 61.9 | 77.5 |
| Film1 | 97 | 0 | 3 | 50 | 58.1 | 1.2 | 0.7 |
| Film2 | 97 | 1.5 | 1.5 | 50 | 46.5 | 23.8 | 22.4 |
| Film3 | 97 | 3 | 0 | 50 | 36.8 | 22.6 | 27.3 |

The additions of the composite materials of the present invention made it possible to modulate the RK opacity value of the polymeric sheet while maintaining the UV absorption required by said sheet. The polymer sheets that incorporated the composite material allow greater light transmission, T, in the visible region while maintaining transmission in the ultraviolet spectral region. This improvement has been made by using a lower percentage of TiO₂ in Film 3 (0.45% by weight of total TiO₂) compared to Film2 (1.725% by total weight of TiO₂) due to the adequate dispersion of the TiO₂ particles in the composite material. The properties achieved also make it possible to reduce the cost of raw materials in plastics exposed to sunlight, such as plastics for greenhouses. Additionally, the incorporation of mineral cores in the composite material is positive for regulating the heating capacity through the plastic because some minerals have greater reflection capacity in the near-infrared wavelength range than TiO₂ opacifying pigments.

### Example 6: Comparative test of the solar reflectance index value in paints

The Solar Reflectance Index (SRI) shows the ability of a material to reflect solar heat such that the temperature of this material increases slightly under exposure to solar rays. The SRI value is a relevant data to evaluate the ability of a paint coating to reflect infrared radiation. According to ASTM E1980-11, the Solar Reflectance Index (SRI) is the relative Ts (steady state surface temperature) of a surface with respect to standard white (SRI=100) and standard black (SRI=0) under solar standard and environmental conditions.

To determine the SRI value, paint P10 from Example 3 (see Table 6) was compared with a commercial Kolpint acrylic paint (Kolpint Facade Painting, from the Pinturas Kolmer S.A. commercial house). Kolpint commercial paint has a mineral filler of 52% by weight in solids distributed between approximately 12% by weight of titanium oxide and approximately 40% by weight of a mineral filler of calcium carbonate. Kolpint paint was selected for presenting a certified SRI of 112 for light wind, a high value among commercial paints. A SRI value >100 indicates that the reflectance of the solar spectrum is greater than that of standard white.

To measure the SRI, the P10 and Kolpint paints were applied by airbrush on 5 cm x 5 cm supports of a Knauf AQUAPANEL^{®} material (Portland cement core with additives and lightening material, covered on its faces by glass mesh). The applied paints were air dried for 48 hours prior to IRS evaluation. The thickness of the dry paint was 125 µm in both cases. The thickness of the dried paint was determined using a 3D optical profilometer from the commercial company Zeta. Each paint was applied 3 times and an IRS study was performed for each application.

The Solar Reflectance Index (SRI) of the paints formulated according to the ASTM E1980-11 standard was evaluated. To obtain these values, the solar reflectance of the applied paints was determined using a Lambda 950 UV Spectrophotometer from Perkin Elmer, using the Reflectance mode and Spectralon material as a standard white (reference for maximum reflectance) and following the standard ASTM E903-12. The emissivity of the surfaces was also determined following the ASTM C1371-15 standard using a FLIR T440 thermal imaging camera and SE&Co adhesive tape. K GaA 209 from the Tesco trading house and known emissivity ε=0.95.

Both paints, commercial Fachadas Kolpint and P10, exhibit values listed in Table 12 for thermal emissivity, ε, Solar Reflectance, RS, and IRS in the three wind conditions that are very similar. These values are characteristic of paints with high solar reflectance indicated to prevent heating of facades. The data in Table 12 show that, using formulation P10 comprising a hierarchical composite material according to the invention, a paint with thermal properties similar to commercial paints with a reduced titanium oxide content is obtained. In the present case, the P10 paint contains 82% less titanium oxide than the commercial paint. The composite material of the invention therefore makes it possible to provide paints with thermal properties close to those of commercial systems using a much smaller amount of titanium oxide, reducing the manufacturing cost of said paint.

**Table 12: Comparative values of thermal emissivity, ε, Solar Reflectance, RS, and IRS in the three wind conditions for: commercial paint for Kolpint and P10 Facades**

| Paint | ε | RS (%) | IRS light wind | IRS moderate wind | IRS strong wind |
|---|---|---|---|---|---|
| Kolpint | 0.92± 0.01 | 87.0 ± 1.4 | 112.0 ± 0.5 | 110.8 ± 0.4 | 110.2 ± 0.4 |
| P10 | 0.93± 0.01 | 87.4 ± 0.3 | 111.5 ± 2.4 | 110.4 ± 2.1 | 109.8 ± 2.0 |

## Claims

1. Hierarchical composite material comprising:
- one or more cores, each core being formed by a mineral particle comprising a material selected from the group consisting of talc, calcium carbonate, calcium silicate, calcium sulfate and aluminosilicates and having a particle size of between 1 and 15 µm; and
- a discontinuous layer of titanium oxide particles dispersed on the surface of each core, the titanium oxide particles having a size between 100 and 1000 nm, such that the amount of titanium oxide is between 5% and 30 % by weight of the composition,
**characterized in that** the hierarchical composite material does not comprise any dispersing agent suitable for dispersing the titanium oxide particles on the surface of the mineral core and **in that** the titanium oxide particles are not substantially aggregated together.

2. The hierarchical composite material according to claim 1 wherein the core formed by a mineral particle comprises talc or calcium carbonate.

3. The hierarchical composite material according to any of claims 1 to 2 wherein the core formed by a mineral particle comprises calcium carbonate.

4. The hierarchical composite material according to any of claims 1 to 3 wherein the core formed by a mineral particle represents between 70% and 95% by weight of the weight of the composite material.

5. The hierarchical composite material according to any of claims 1 to 4 wherein the core formed by a mineral particle has a particle size of between 1 and 12 µm.

6. The hierarchical composite material according to any of claims 3 to 5 wherein the size of the calcium carbonate particles is between 2 and 6 µm.

7. The hierarchical composite material according to any of claims 1 to 6 wherein the titanium oxide particles represent between 10% and 25% of the weight of the material.

8. The hierarchical composite material according to any of claims 1 to 7 wherein the size of the titanium oxide particles is between 100 and 600 nm, preferably between 200 and 400 nm.

9. The hierarchical composite material according to claim 1 consisting essentially of a core formed by a particular mineral particle according to any of claims 1 to 6 and a discontinuous layer of titanium oxide particles dispersed on the surface of said core in which titanium oxide particles are defined according to any of claims 1, 7 and 8.

10. The hierarchical composite material according to any of claims 1 to 9 wherein the particle size of the core formed by a mineral particle is between 10 to 20 times the particle size of the titanium oxide.

11. The hierarchical composite material according to any of claims 1 to 10 **characterized in that** it reflects an amount greater than 76% of a light having a wavelength between 600 nm and 800 nm.

12. Procedure for preparing a hierarchical composite material that includes the steps of:
(i) providing a solid mixture with a moisture content of less than 0.05% by weight of the mixture comprising (a) one or more minerals in the form of particles of size between 1 and 15 µm comprising a selected material from the group consisting of talc, calcium carbonate, calcium silicate, calcium sulfate and aluminosilicates, and (b) titanium oxide in the form of particles having a size between 100 and 1000 nm and in such an amount that the amount of titanium oxide represents 5% to 30% by weight of said mixture, the solid mixture being **characterized in that** it does not comprise any dispersing agent suitable for dispersing the titanium oxide particles on the surface of the one or more minerals;
(ii) subjecting the mixture provided in step (i) to mechanical forces to disperse the titanium oxide particles over the particle surface of the one or more minerals.

13. The method according to claim 12 wherein the solid mixture of step (i) consists essentially of the titanium oxide particles and the particles of the one or more mineral.

14. The process according to any of claims 12 to 13 wherein, in the solid mixture of step (i), the mineral comprises talc or calcium carbonate, preferably calcium carbonate.

15. The procedure according to any of claims 12 to 14 in which, in the solid mixture of step (i), the particles of the one or more mineral have a particle size of between 1 and 12 µm.

16. The process according to any of claims 12 to 15 wherein, in the solid mixture of step (i), the one or more mineral comprises calcium carbonate and has a particle size of between 2 and 6 µm.

17. The procedure according to any of claims 12 to 16 wherein, in the solid mixture of step (i), the titanium oxide particles represent between 10% and 25% of the weight of the solid mixture.

18. The method according to any of claims 12 to 17 wherein, in the solid mixture of step (i), the size of the titanium oxide particles is between 100 and 600 nm, preferably between 200 and 400 nm.

19. The method according to any of claims 12 to 18 wherein, in the solid mixture of step (i), the particle size of the one or more mineral is between 10 to 20 times the particle size of the titanium oxide.

20. The process according to any of claims 12 to 19 wherein step (ii) is carried out by dry milling.

21. The procedure according to claim 20 in which the dry milling is carried out in the presence of microballs with a density greater than or equal to 3 g/cm³ and a diameter between 1 and 3 mm.

22. The method according to any of claims 20 to 21 wherein the dry milling is carried out at a mill speed of between 200 and 600 rpm.

23. The method according to any of claims 20 to 22, further comprising step (c) of separating in the product of step (b) the hierarchical composite material from the components with a size greater than 200 µm.

24. Hierarchical composite material obtainable by the process according to any of claims 12 to 23.

25. Use of the hierarchical composite material according to any of claims 1 to 11 and 24 as a whitening and/or opacifying agent in paint formulations.

26. Paint composition comprising a hierarchical composite material according to any of claims 1 to 11 and 24.

27. Paint composition according to claim 26 wherein the amount of hierarchical composite material is between 1% and 15% by weight, preferably between 1% and 10% by weight.

28. Paint composition according to any of claims 26 to 27 further comprising one or more colorants, preferably in an amount of 1% to 5% by weight of each colorant included in the composition.

29. Use of the hierarchical composite material according to any of claims 1 to 11 and **24** as a heat dissipation agent and/or opacifying agent in plastic formulation.

30. Polymer composition suitable for forming plastic products by thermoforming comprising a hierarchical composite material according to any of claims 1 to 11 and 24.

31. Composition according to claim 30 wherein the polymer is low density polyethylene.

32. Composition according to any of claims 30 to 31 wherein the amount of hierarchical composite material is between 1% and 5% by weight.

33. Composition according to any of claims 30 to 32 further comprising titanium oxide, preferably in an amount of between 1% and 5% by weight.
